# EUROPÄISCHE PATENTSCHRIFT

(11) **EP 4 592 581 B1**
(45) Veröffentlichungstag und Bekanntmachung des Hinweises auf die Patenterteilung: **20.05.2026**
(21) Anmeldenummer: 24154209.1
(22) Anmeldetag: 26.01.2024
(51) Int. Cl.: F16P 3/14

(54) **ÜBERWACHUNGSEINRICHTUNG**
MONITORING DEVICE
DISPOSITIF DE SURVEILLANCE

(43) Veröffentlichungstag der Anmeldung: 30.07.2025
(73) Patentinhaber: Leuze electronic GmbH + Co. KG, 73277 Owen/Teck (DE)
(72) Erfinder: Eder, Alexander, 86928 Hofstetten (DE)
(74) Vertreter: Ruckh, Rainer Gerhard

(56) Entgegenhaltungen:
- EP-A1- 3 910 230
- DE-B4- 10 313 194
- US-B2- 8 224 032

## Beschreibung

Die Erfindung betrifft eine Überwachungsvorrichtung.

Derartige Überwachungsvorrichtungen werden insbesondere zur Gefahrenbereichsüberwachung an gefahrbringenden Anlagen eingesetzt. Ein Gefahrenbereich an einer solchen Anlage wird mit einem Sicherheitssensor, insbesondere einem optischen Sensor überwacht, der beispielsweise als scannender Sensor derart ausgebildet ist, dass mit den Lichtstrahlen einer Sende-/Empfangseinheit dieses optischen Sensors periodisch ein Überwachungsbereich abgetastet wird. Insbesondere kann der optische Sensor als Flächendistanzsensor, das heißt scannender Distanzsensor ausgebildet sein, mit welchem Positionen von Objekten im Überwachungsbereich bestimmt werden können.

Bei bekannten Überwachungsvorrichtungen werden scannende optische Sensoren derart eingesetzt, dass mit diesen eine Objektüberwachung nicht im gesamten Überwachungsbereich, sondern nur innerhalb eines vorgegebenen Schutzfelds erfolgt. Das Schutzfeld ist als Parameter im optischen Sensor gespeichert, wobei dessen Dimension an den zu überwachenden Gefahrenbereich bestmöglich angepasst wird.

Typischerweise wird hierzu die Abmessung des Schutzfelds vor Inbetriebnahme berechnet, insbesondere unter Berücksichtigung von Gefährdungsstellen im Überwachungsbereich und auch von einzuhaltenden Sicherheitsabständen.

Die Auswertung der mit dem optischen Sensor generierten Messdaten erfolgt im optischen Sensor. Hierzu ist im optischen Sensor eine Auswerteeinheit integriert, die die am Ausgang eines Empfängers der Sende-/Empfangseinheit anstehenden Empfangssignale auswertet. Dabei wird ein binäres Objektfeststellungssignal generiert, dessen Schaltzustände angeben, ob sich innerhalb des Schutzfeldes ein Objekt befindet.

Dieses Objektfeststellungssignal wird an eine Steuerung ausgegeben, die die Anlage steuert. Wird ein Objektfeststellungssignal ausgegeben, das signalisiert, dass kein Objekt im Schutzfeld vorhanden ist, wird der Betrieb der Anlage frei gegeben. Generiert der optische Sensor ein Objektfeststellungssignal mit dem Schaltzustand, der einer Objektdetektion im Schutzfeld entspricht, wird durch dieses Objektfeststellungssignal die Anlage mittels der Steuerung stillgesetzt, um Gefahrenzustände zu vermeiden.

Abhängig von der jeweiligen Applikation oder auch abhängig vom Betriebszustand der Anlage kann es erforderlich sein, die Gefahrenbereichsüberwachung anzupassen. Dies wird dadurch erreicht, dass im optischen Sensor unterschiedliche Schutzfelder abgespeichert sind, wobei je nach Anforderung das am besten geeignete Schutzfeld aktiviert wird.

Nachteilig bei derartigen Überwachungseinrichtungen ist, dass ein durch Berechnungen konfiguriertes Schutzfeld durch eine Person nochmals überprüft werden muss, was beispielsweise dadurch erfolgen kann, dass die Person das Schutzfeld an einem Rechner visuell kontrollieren und quittieren muss.

Dies ist umständlich und zeitaufwendig, insbesondere dann, wenn mehrere Schutzfelder vorhanden sind, die kontrolliert werden müssen.

Die DE 103 13 194 B4 betrifft einen optischen Sensor mit einem Distanzsensorelement bestehend aus einem Sendelichtstrahlen emittierenden Sender und einem Empfangslichtstrahlen empfangenden Empfänger, mit einer Ablenkeinheit, mittels derer die Sendelichtstrahlen periodisch innerhalb eines einen Überwachungsbereich definierenden Winkelbereichs geführt sind, und mit einer Auswerteeinheit zur Auswertung der am Ausgang des Empfängers anstehenden Empfangssignales. Der Winkelbereich ist in eine vorgegebene Anzahl von Winkelsegmenten unterteilt, wobei für jedes Winkelsegment in der Auswerteeinheit aus den Empfangssignalen jeweils wenigstens ein Distanzwert abgeleitet wird. In der Auswerteeinheit sind wenigstens ein Schutzfeld und der Durchmesser eines Referenzobjekts abgespeichert. In der Auswerteeinheit sind winkelabhängige Auflösungsbereiche vorgegeben, deren Größen jeweils dem Ausschnitt des Winkelbereichs entsprechen, über welchen sich das dort am Schutzfeldrand liegende Referenzobjekt erstrecken würde. In der Auswerteeinheit wird nur dann eine Objektmeldung generiert, wenn in sämtlichen Winkelsegmenten wenigstens eines Auflösungsbereiches innerhalb des Schutzfelds liegende Distanzwerte registriert werden.

Die EP 3 910 230 A1 betrifft eine Überwachungseinrichtung bestehend aus einer Anordnung von Mutingsensoren und aus einem Sicherheitssensor, welcher zur Überwachung eines in einer Ebene verlaufenden Schutzfeldes derart ausgebildet ist, dass bei einem vom Sicherheitssensor im Schutzfeld registrierten Objekteingriff eine Sicherheitsfunktion ausgelöst wird. Bei Erfassung eines zulässigen Objekts mittels der Mutingsensoren ist der Sicherheitssensor zumindest partiell überbrückt. Die Mutingsensoren sind von in der Ebene des Schutzfeldes angeordneten Distanzsensoren gebildet. Mit den Distanzsensoren wird ein Bereich erfasst, der in der Ebene des Schutzfelds liegt.

Der Erfindung liegt die Aufgabe zugrunde, eine Überwachungsvorrichtung mit erhöhter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem für eine Schutzfeldüberwachung ausgebildeten Sicherheitssensor. Mit dem Sicherheitssensor werden Positionen von Objekten in einem Überwachungsbereich bestimmt. In einem Einlernvorgang wird anhand von Positionen von mit dem Sicherheitssensor erfassten nichtsicherheitskritischen Objekt eine Referenzkontur im Sicherheitssensor bestimmt, welche mittels des Sicherheitssensors erfassten Messwerten fortlaufend auf Plausibilität überprüft wird, wodurch eine Fehlerüberprüfung der Referenzkontur durchgeführt wird, so dass die Referenzkontur ein sicherheitstechnisch geprüftes Element bildet. Die Referenzkontur wird zur Kontrolle von konfigurierten Schutzfeldern verwendet.

Die Erfindung betrifft auch ein entsprechendes Verfahren.

Die erfindungsgemäße Überwachungseinrichtung dient zur Absicherung eines Gefahrenbereichs an einer Anlage. Bei der Anlage kann es sich um eine stationäre Anlage wie z.B. eine Maschine handeln. Weiterhin kann die Anlage ein Fahrzeug sein, wie z.B. ein AGV (automated guided vehicle).

Die Überwachungseinrichtung weist einen Sicherheitssensor auf, mittels dessen Objekte im Überwachungsbereich erfasst werden können, wobei der Sicherheitssensor abhängig von den Objektdetektionen eine Sicherheitsfunktion auslöst. Der Sicherheitssensor bildet damit eine wesentliche sicherheitstechnische Komponente der Überwachungseinrichtung, mittels derer Gefahrensituationen insbesondere für Personen, die in den Gefahrenbereich eindringen, vermieden werden.

Der Sicherheitssensor ist hierzu im Bereich oder an der Anlage montiert. Insbesondere ist der Sicherheitssensor an einem die Anlage bildenden Fahrzeug montiert.

Der Sicherheitssensor weist zur Erfüllung der normativen sicherheitstechnischen Anforderungen einen fehlersicheren Aufbau auf. Dieser kann dadurch realisiert werden, dass der Sicherheitssensor eine mehrkanalige Auswerteeinheit zur Auswertung von Sensorsignalen aufweist.

Der Sicherheitssensor kann ein Radarsensor sein. Besonders vorteilhaft ist der Sicherheitssensor ein optischer Sensor.

Generell können mit dem Sicherheitssensor Positionen von Objekten in einem flächigen oder einen Raumbereich umfassenden Überwachungsbereich bestimmt werden.

Hierzu führt der Sicherheitssensor ortsaufgelöste Distanzmessungen durch.

Besonders vorteilhaft ist der Sicherheitssensor ein Flächendistanzsensor. Mit dem Flächendistanzsensor wird periodisch ein den Überwachungsbereich bildender Winkelbereich abgetastet. Der Winkelbereich ist in Winkelsegmente unterteilt. Für jedes Winkelsegment wird ein Distanzmesswert ermittelt.

Ist der Sicherheitssensor als optischer Sensor ausgebildet, weist dieser eine Sender-Empfänger-Einheit mit einem Lichtstrahlen emittierenden Sender und einem Lichtstrahlen empfangenden Empfänger auf. Die Sender-Empfänger-Einheit bildet einen Distanzsensor, mit dem vorteilhaft Distanzmessungen nach einem Impuls-Laufzeit-Verfahren oder nach einem Phasenmessverfahren durchgeführt werden.

Mittels einer der Sender-Empfänger-Einheit zugeordneten Ablenkeinheit oder durch Installation der Sender-Empfänger-Einheit in einem rotierenden Messkopf werden die Lichtstrahlen periodisch innerhalb eines Winkelbereichs umfassenden, flächigen Überwachungsbereich geführt.

In einem Arbeitsbetrieb führt der Sicherheitssensor eine Schutzfeldüberwachung durch. Dabei wird vorteilhaft abhängig von den aktuellen Randbedingungen im Sicherheitssensor ein geeignetes Schutzfeld aktiviert, das sich über einen bestimmten Bereich, insbesondere Flächenbereich, des Gefahrenbereichs erstreckt.

Abhängig davon ob mit dem Sicherheitssensor im Schutzfeld ein sicherheitskritisches Objekt wie z.B. eine Person erfasst wird, generiert der Sicherheitssensor ein Objektfeststellungssignal, das insbesondere in Form eines binären Schaltsignals ausgebildet ist, dessen Schaltzustände angeben, ob sich ein sicherheitskritisches Objekt im Schutzfeld befindet oder nicht. Wird mit dem Sicherheitssensor ein sicherheitskritisches Objekt im Schutzfeld detektiert, wird durch das entsprechende Schaltsignal eine Sicherheitsfunktion ausgelöst, mit dem die Anlage in einen sicheren Zustand überführt wird. Insbesondere wird die Anlage stillgesetzt.

Die einzelnen Schutzfelder werden vor Inbetriebnahme des Sicherheitssensors konfiguriert und dann im Sicherheitssensor abgespeichert, so dass sie dann im Arbeitsbetrieb des Sicherheitssensors wahlweise zur Durchführung von Schutzfeldüberwachungen aktiviert werden können.

Vorteilhaft erfolgt die Konfiguration eines Schutzfelds dadurch, dass dieses im Sicherheitssensor anhand vorgegebener Gefährdungsstellen im Überwachungsbereich und anhand vorgegebener Sicherheitsabstände vor Inbetriebnahme des Sicherheitssensors berechnet und im Sicherheitssensor abgespeichert wird.

Weiterhin kann während eines Einlernvorgangs eine ein Schutzfeld definierende Bahn von einer Person abgeschritten wird, die mit dem Sicherheitssensor erfasst wird.

Während dieses Abschreitens wird dann die Person direkt oder ein Probekörper, den die Person mit sich führt, erfasst.

Erfindungsgemäß wird zur Kontrolle und einer ggf. erforderlichen Korrektur der Schutzfelder in einem Einlernvorgang eine Referenzkontur bestimmt.

Der Einlernvorgang und damit die Bestimmung der Referenzkontur wird durch Einlesen eines externen Triggersignals in den Sicherheitssensor initiiert.

Vorteilhaft wird das externe Triggersignal von einer Steuerung über einen Eingang in den Sicherheitssensor eingelesen. Das Triggersignal kann von einer nicht sicheren Steuerung über einen nicht sicheren Eingang in den Sicherheitssensor eingelesen werden. Nicht sicher bedeutet, dass in der Steuerung bzw. dem Eingang keine Mittel zur Fehleraufdeckung vorhanden sind.

Alternativ kann die Steuerung von einer Sicherheitssteuerung gebildet sein, die insbesondere die zu überwachende Anlage steuert. Die Sicherheitssteuerung weist vorteilhaft zur Fehleraufdeckung eine zweikanalige Rechnerstruktur mit zwei sich gegenseitig überwachenden Rechnereinheiten auf.

Dementsprechend kann das Einlesen des Triggersignals über einen fehlersicheren Eingang des Sicherheitssensors erfolgen. Die Fehlersicherheit des Eingangs kann dadurch realisiert werden, dass von der Auswerteeinheit Testsignale an den Eingang ausgegeben, vom Eingang in die Auswerteeinheit rückgelesen und dort mit einer Erwartungshaltung, d.h. vorgegebenen Sollwerten verglichen werden.

Vorteilhaft wird auch die Dauer des Einlernvorgangs durch die Steuerung vorgegeben.

Die Bestimmung der Referenzkontur erfolgt dadurch, dass mit dem Sicherheitssensor im Einlernvorgang Objektdetektionen durchgeführt werden, und zwar dann, wenn sich keine sicherheitskritischen Objekte, wie unbefugt in den Überwachungsbereich eindringende Personen befinden. Mit dem Sicherheitssensor werden dann nichtsicherheitskritische Objekte wie Maschinenteile, Wände, Lagergüter wie Paletten und dergleichen detektiert.

Die dabei ermittelten Distanzwerte dienen dann zur Generierung der Referenzkontur, d.h. die Referenzkontur wird aus diesen Distanzwerten abgeleitet.

Zweckmäßig werden zur Definition der Referenzkontur für die einzelnen Distanzwerte Toleranzgrenzen definiert.

Bei einem Sicherheitssensor in Form eines Flächendistanzsensors wird die Referenzkontur im Einlernvorgang ermittelt. Für jeden ermittelten Distanzwert in einem Winkelsegment wird eine obere und untere Toleranzgrenze definiert.

Die obere Toleranzgrenze ergibt sich durch Addition eines vorgegebenen Werts zum jeweiligen Distanzwert, die untere Toleranzgrenze ergibt sich durch Subtraktion eines vorgegebenen Werts vom jeweiligen Distanzwert.

Vorteilhaft wird während des Einlernvorgangs der Winkelbereich mit dem Sicherheitssensor mehrfach abgetastet. Für jedes Winkelsegment wird der jeweils kleinste Distanzwert zur Bildung der Referenzkontur herangezogen.

Damit wird eine möglichst hohe Fehlersicherheit bei der Definition der Referenzkontur erzielt, da bei dieser die jeweiligen Distanzwerte berücksichtigt werden, die am nächsten zum Sicherheitssensor liegen.

Ein wesentlicher Aspekt der Erfindung besteht darin, dass die ermittelte Referenzkontur anhand aktueller Messwerte des Sicherheitssensors fortlaufend auf Plausibilität überprüft wird. Dadurch wird eine Fehlerüberprüfung der Referenzkontur durchgeführt, so dass die Referenzkontur ein sicherheitstechnisch geprüftes Element bildet.

Vorteilhaft wird zur Plausibilitätsprüfung geprüft, ob nach Festlegung der Referenzkontur die für die einzelnen Winkelsegmente ermittelten Distanzwerte innerhalb der Toleranzgrenze liegen.

Erfindungsgemäß wird die Referenzkontur zur Kontrolle und ggf. zur Korrektur von konfigurierten Schutzfeldern verwendet.

Die Korrektur erfolgt insbesondere derart, dass während eines auf den Einlernvorgang folgenden Arbeitsbetriebs in einem Winkelsegment ein Distanzwert eines Schutzfelds durch den Distanzwert der Referenzkontur ersetzt wird, wenn der Distanzwert des Schutzfelds größer als der Distanzwert der Referenzkontur ist.

Dadurch werden nicht nur fehlerhafte Konfigurationen von Schutzfeldern, bei welchen nichtsicherheitskritische Objekte, in Schutzfelder einbezogen sind, vermieden.

Vielmehr erfolgt mit der Referenzkontur auch eine Kontrolle der konfigurierten Schutzfelder.

Dies hat den Vorteil, dass nach der Konfiguration der Schutzfelder keine weitere Kontrolle der Schutzfelder durch eine Bedienperson mehr nötig ist. Die umständliche und zeitaufwändige Verifizierung von Schutzfeldern durch eine Bedienperson entfällt somit. Vielmehr können die mit der Referenzkontur kontrollierten Schutzfelder direkt für den Arbeitsbetrieb des Sicherheitssensors übernommen werden.

Die Erfindung wird im Folgenden anhand der Zeichnungen erläutert. Es zeigt:
- Figur 1:: Schematische Darstellung eines Ausführungsbeispiels der erfindungsgemäßen Überwachungsvorrichtung.
- Figur 2:: Erstes Ausführungsbeispiel eines Sicherheitssensors für die Überwachungsvorrichtung gemäß Figur 1.
- Figur 3:: Zweites Ausführungsbeispiel eines Sicherheitssensors für die Überwachungsvorrichtung gemäß Figur 1.
- Figur 4:: Beispiel einer Referenzkontur, die mit dem Sicherheitssensor ermittelt wird.

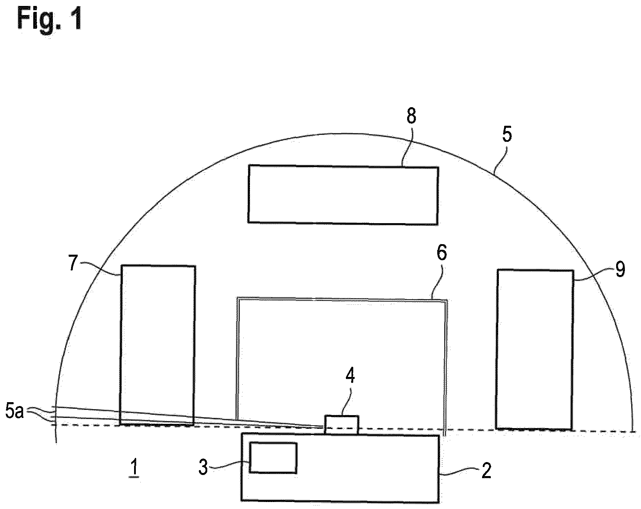

Figur 1 zeigt schematisch ein Ausführungsbeispiel der erfindungsgemäßen Überwachungseinrichtung 1. Die Überwachungseinrichtung 1 wird im vorliegenden Fall im Bereich der Sicherheitstechnik eingesetzt. Dabei wird ein Gefahrenbereich im Vorfeld einer Anlage 2 überwacht. Die Anlage 2 wird mit einer Sicherheitssteuerung 3 gesteuert. Zur Erfüllung der sicherheitstechnischen Anforderungen weist die Sicherheitssteuerung 3 einen fehlersicheren Aufbau auf. Im vorliegenden Fall ist die Anlage 2 ein Fahrzeug, wie z.B. ein AGV. Generell kann die Anlage 2 auch von einer stationären Maschine gebildet sein.

Zur Überwachung des Gefahrenbereichs weist die Überwachungseinrichtung 1 einen Sicherheitssensor 4 auf, mit dem ein Überwachungsbereich 5 überwacht werden kann. Entsprechend der maximalen Reichweite des Sicherheitssensors 4 wird mit diesem im vorliegenden Fall ein ebener, halbkreisförmiger Überwachungsbereich 5 überwacht, was jedoch nicht zwingend ist.

Der Sicherheitssensor 4 ist ein ortsauflösender Distanzsensor. Mit dem Sicherheitssensor 4 werden bei Objektdetektionen im einzelnen periodisch einzelne Winkelsegmente 5a des den Überwachungsbereich 5 bildenden Winkelbereichs abgetastet, wobei für jedes Winkelsegment 5a ein Distanzwert ermittelt wird.

Mit dem Sicherheitssensor 4 erfolgt eine Objektüberwachung innerhalb eines vorgegebenen Schutzfeldes 6. Um eine Anpassung an sich ändernde Randbedingungen zu gewährleisten, sind im Sicherheitssensor 4 unterschiedliche Schutzfelder 6 gespeichert, wobei in Figur 1 nur ein Schutzfeld 6 dargestellt ist.

Wie Figur 1 weiter zeigt, liegen (zumindest teilweise) im Überwachungsbereich 5 auch weitere Gegenstände 7, 8, 9 wie Fertigungseinrichtungen, Regale, Fördereinheiten oder dergleichen. Generell gehen von diesen Gegenständen 7, 8, 9 keine Gefahren aus. Daher sind die Schutzfelder 6 so dimensioniert, dass diese Gegenstände 7, 8, 9 außerhalb der Schutzfelder 6 liegen.

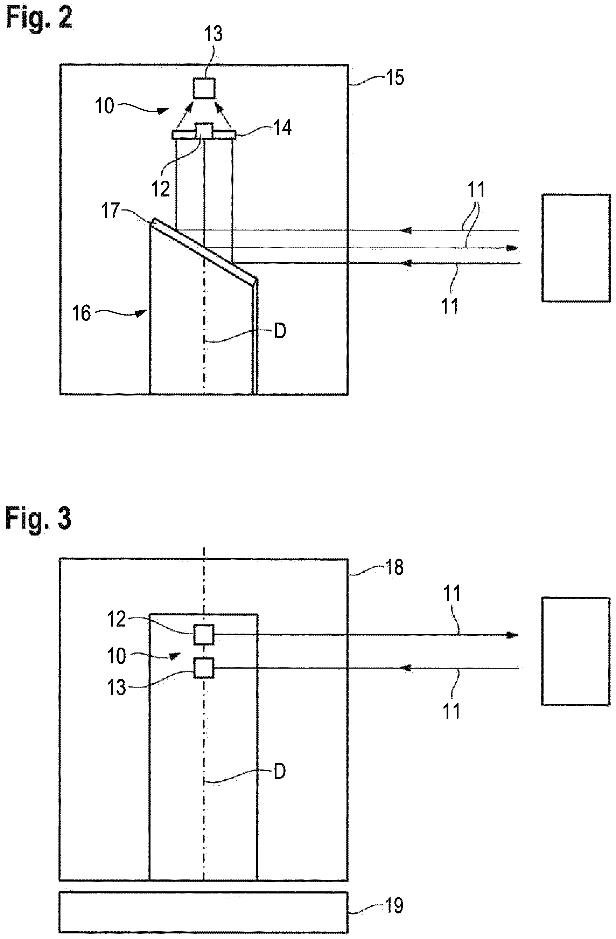

Figur 2 zeigt ein erstes Ausführungsbeispiel des Sicherheitssensors 4 in Form eines optischen Sensors. Der optische Sensor weist eine Sende-/Empfangseinheit 10 mit einem Lichtstrahlen 11 emittierenden Sender 12 und einem Lichtstrahlen 11 empfangenden Empfänger 13 auf. Der Sender 12 ist zum Beispiel von einer Laserdiode gebildet, der Empfänger 13 ist zum Beispiel von einer Photodiode gebildet. Dem Empfänger 13 ist eine Empfangsoptik 14 zugeordnet. Die Sende-/Empfangseinheit 10 ist stationär in einem Gehäuse 15 integriert.

Ebenfalls im Gehäuse 15 ist eine Ablenkeinheit 16 vorgesehen, die einen motorisch getriebenen, um eine Drehachse D drehbaren Umlenkspiegel 17 aufweist. Die vom Sender 12 emittierten Lichtstrahlen 11 und die von einem zu detektierenden Objekt zurückreflektierten Lichtstrahlen 11 werden über den Umlenkspiegel 17 geführt. Durch die Drehbewegung des Umlenkspiegels 17 werden die Lichtstrahlen 11 periodisch im Überwachungsbereich 5 geführt. Mittels eines Winkelgebers wird die aktuelle Drehstellung des Umlenkspiegels 17 und somit die aktuelle Strahlenrichtung der Lichtstrahlen 11 erfasst.

Im vorliegenden Fall bildet die Sende-/Empfangseinheit 10 einen nach einem Puls-Laufzeit-Verfahren arbeitenden Distanzsensor. Der optische Sensor bildet somit einen Flächendistanzsensor.

Figur 3 zeigt eine zweite Ausführungsform des Sicherheitssensors 4, der wieder ein optischer Sensor ist. In diesem Fall ist eine Sende-/Empfangseinheit 10 mit einem Lichtstrahlen 11 emittierenden Sender 12 und einem Lichtstrahlen 11 empfangenden Empfänger 13 in einem rotierenden Messkopf 18 angeordnet. Der um eine Drehachse D drehbare, und auf einem feststehenden Sockel 19 gelagerte Messkopf 18 bewirkt in diesem Fall die periodische Ablenkung der Lichtstrahlen 11 im Überwachungsbereich 5. Ansonsten entspricht der optische Sensor 4 gemäß Figur 3 der Ausführungsform gemäß Figur 2.

Generell weist der Sicherheitssensor 4 eine (nicht dargestellte) Auswerteeinheit auf, in welcher in Abhängigkeit der Empfangssignale des Empfängers 13 ein Objektfeststellungsignal generiert wird.

Der Sicherheitssensor 4 weist einen fehlersicheren Aufbau auf. Insbesondere ist die Auswerteeinheit redundant aufgebaut, beispielsweise in Form zweier sich gegenseitig zyklisch überwachenden Rechnereinheiten.

Im vorliegenden Fall werden im Sicherheitssensor 4 Objektfeststellungssignale in Form binärer Schaltsignale generiert, deren Schaltzustände angeben, ob sich ein sicherheitskritisches Objekt im Schutzfeld 6 befindet oder nicht.

Diese Schaltsignale werden vom Sicherheitssensor 4 zur Sicherheitssteuerung 3 übertragen. Dort können sie direkt zur Steuerung der Anlage 2 genutzt werden. Insbesondere wird die Anlage 2 stillgesetzt, wenn mit einem Schaltsignal ein Objekteingriff im Schutzfeld 6 gemeldet wird.

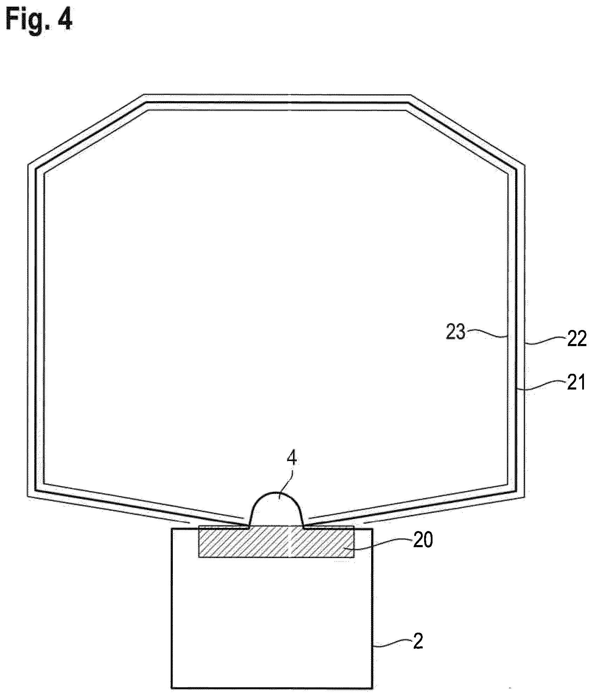

Die einzelnen Schutzfelder 6 werden vor Inbetriebnahme des Sicherheitssensors 4 konfiguriert. Die Konfiguration erfolgt dadurch, dass diese im Sicherheitssensor 4 anhand vorgegebener Gefahrenstellen 20 (Figur 4) und einzuhaltender Sicherheitsabstände berechnet werden. Die Schutzfelder 6 werden dabei so dimensioniert, dass nichtsicherheitskritische Objekte wie die Gegenstände 7, 8, 9 nicht in die Schutzfelder 6 ragen. Die so konfigurierten Schutzfelder 6 werden im Sicherheitssensor 4 abgespeichert.

Erfindungsgemäß wird zur Kontrolle und einer ggf. erforderlichen Korrektur der Schutzfelder 6 in einem Einlernvorgang eine Referenzkontur 21 bestimmt. Ein Beispiel einer Referenzkontur 21 zeigt Figur 4.

Der Einlernvorgang und damit die Bestimmung der Referenzkontur 21 wird durch Einlesen eines externen Triggersignals in den Sicherheitssensor 4 initiiert. Im vorliegenden Fall wird das Triggersignal von der Sicherheitssteuerung 3 in den Sicherheitssensor 4 eingelesen, vorzugsweise über einen sicheren Eingang des Sicherheitssensors 4.

Über die Sicherheitssteuerung 3 wird auch die Dauer des Einlernvorgangs vorgegeben.

Die Bestimmung der Referenzkontur 21 erfolgt dadurch, dass mit dem Sicherheitssensor 4 im Einlernvorgang Objektdetektionen durchgeführt werden, und zwar dann, wenn sich keine sicherheitskritischen Objekte wie unbefugt eindringende Personen in dem Überwachungsbereich 5 befinden. Mit dem Sicherheitssensor 4 werden dann nichtsicherheitskritische Objekte wie Maschinenteile, Wände, Lagergüter wie Paletten und dergleichen detektiert.

Die dabei ermittelten Distanzwerte dienen dann zur Generierung der Referenzkontur 21, d.h. die Referenzkontur 21 wird aus diesen Distanzwerten abgeleitet.

Zweckmäßig werden zur Definition der Referenzkontur 21 für die einzelnen Distanzwerte Toleranzgrenzen 22, 23 definiert.

Die obere Toleranzgrenze 22 ergibt sich durch Addition eines vorgegebenen Werts zum jeweiligen Distanzwert, die untere Toleranzgrenze 23 ergibt sich durch Subtraktion eines vorgegebenen Werts vom jeweiligen Distanzwert.

Die Toleranzgrenzen können über den Winkelbereich konstant sein oder auch variabel sein, insbesondere abhängig von den Beträgen der Distanzwerte variieren.

Vorteilhaft wird während des Einlernvorgangs der Winkelbereich mit dem Sicherheitssensor 4 mehrfach abgetastet. Für jedes Winkelsegment 5a wird der jeweils kleinste Distanzwert zur Bildung der Referenzkontur 21 herangezogen.

Damit wird eine möglichst hohe Fehlersicherheit bei der Definition der Referenzkontur 21 erzielt, da bei dieser die jeweiligen Distanzwerte berücksichtigt werden, die am nächsten zum Sicherheitssensor 4 liegen.

Dieses Verfahren kann vorteilhaft zu einer Festlegung der Referenzkontur 21 derart genutzt werden, dass während des Einlernvorgangs eine die Referenzkontur 21 definierende Bahn von einer Person abgeschritten wird, die mit dem Sicherheitssensor 4 erfasst wird.

Während dieses Abschreitens wird dann die Person direkt oder ein Probekörper, den die Person mit sich führt, erfasst.

Die ermittelte Referenzkontur 21 wird anhand aktueller Messwerte des Sicherheitssensors 4 fortlaufend auf Plausibilität überprüft.

Dadurch wird eine Fehlerüberprüfung der Referenzkontur 21 durchgeführt, so dass die Referenzkontur 21 ein sicherheitstechnisch geprüftes Element bildet.

Vorteilhaft wird zur Plausibilitätsprüfung die Referenzkontur 21 geprüft, ob nach deren Festlegung für die einzelnen Winkelsegmente 5a ermittelten Distanzwerte innerhalb der Toleranzgrenzen 22, 23 liegen.

Erfindungsgemäß wird die Referenzkontur 21 zur Kontrolle und ggf. zur Korrektur von konfigurierten Schutzfeldern 6 verwendet.

Die Korrektur erfolgt insbesondere derart, dass während eines auf den Einlernvorgang folgenden Arbeitsbetriebs in einem Winkelsegment 5a ein Distanzwert eines Schutzfelds 6 durch den Distanzwert der Referenzkontur 21 ersetzt wird, wenn der Distanzwert des Schutzfelds 6 größer als der Distanzwert der Referenzkontur 21 ist.

Dadurch werden fehlerhafte Konfigurationen von Schutzfeldern 6, bei welchen nichtsicherheitskritische Objekte in Schutzfelder 6 einbezogen sind, vermieden.

Dies hat den Vorteil, dass nach der Konfiguration der Schutzfelder 6 keine weitere Kontrolle der Schutzfelder 6 durch eine Bedienperson mehr nötig ist. Die umständliche und zeitaufwändige Verifizierung von Schutzfeldern 6 durch eine Bedienperson entfällt somit. Vielmehr können die mit der Referenzkontur 21 kontrollierten Schutzfelder 6 direkt für den Arbeitsbetrieb des Sicherheitssensors 4 übernommen werden.

### Bezugszeichenliste

- (1): Überwachungseinrichtung
- (2): Anlage
- (3): Sicherheitssteuerung
- (4): Sicherheitssensor
- (5): Überwachungsbereich
- (5a): Winkelsegment
- (6): Schutzfeld
- (7): Gegenstand
- (8): Gegenstand
- (9): Gegenstand
- (10): Sende-/ Empfangseinheit
- (11): Lichtstrahl
- (12): Sender
- (13): Empfänger
- (14): Empfangsoptik
- (15): Gehäuse
- (16): Ablenkeinheit
- (17): Umlenkspiegel
- (18): Messkopf
- (19): Sockel
- (20): Gefahrenstellen
- (21): Referenzkontur
- (22): obere Toleranzgrenze
- (23): untere Toleranzgrenze

- (D): Drehachse

## Patentansprüche

1. Überwachungseinrichtung (1) mit einem für eine Schutzfeldüberwachung ausgebildeten Sicherheitssensor (4), wobei mit dem Sicherheitssensor (4) Positionen von Objekten in einem Überwachungsbereich (5) bestimmt werden, **dadurch gekennzeichnet, dass** in einem Einlernvorgang anhand von Positionen von mit dem Sicherheitssensor (4) erfassten nichtsicherheitskritischen Objekt eine Referenzkontur (21) im Sicherheitssensor (4) bestimmt wird, welche mittels des Sicherheitssensors (4) erfassten Messwerten fortlaufend auf Plausibilität überprüft wird, wodurch eine Fehlerüberprüfung der Referenzkontur (21) durchgeführt wird, so dass die Referenzkontur (21) ein sicherheitstechnisch geprüftes Element bildet, und dass die Referenzkontur (21) zur Kontrolle von konfigurierten Schutzfeldern (6) verwendet wird.

2. Überwachungseinrichtung (1) nach Anspruch 1, **dadurch gekennzeichnet, dass** der Sicherheitssensor (4) ein optischer Sensor oder ein Radarsensor ist.

3. Überwachungseinrichtung (1) nach einem der Ansprüche 1 oder 2, **dadurch gekennzeichnet, dass** der Sicherheitssensor (4) ein Flächendistanzsensor ist.

4. Überwachungseinrichtung (1) nach Anspruche 3, **dadurch gekennzeichnet, dass** mit dem Flächendistanzsensor periodisch ein den Überwachungsbereich (5) bildender Winkelbereich abgetastet wird, wobei der Winkelbereich in Winkelsegmente (5a) unterteilt ist, und wobei für jedes Winkelsegment (5a) ein Distanzmesswert ermittelt wird.

5. Überwachungseinrichtung (1) nach Anspruch 4, **dadurch gekennzeichnet, dass** die Referenzkontur (21) im Einlernvorgang dadurch ermittelt wird, dass für jeden ermittelten Distanzwert in einem Winkelsegment (5a) eine obere und untere Toleranzgrenze (23) definiert wird.

6. Überwachungseinrichtung (1) nach Anspruch 5, **dadurch gekennzeichnet, dass** zur Plausibilitätsprüfung die Referenzkontur (21) geprüft wird, ob nach deren Festlegung für die einzelnen Winkelsegmente (5a) ermittelten Distanzwerte innerhalb der Toleranzgrenze liegen.

7. Überwachungseinrichtung (1) nach einem der Ansprüche 5 oder 6, **dadurch gekennzeichnet, dass** während des Einlernvorgangs der Winkelbereich mit dem Sicherheitssensor (4) mehrfach abgetastet wird, wobei für jedes Winkelsegment (5a) der jeweils kleinste Distanzwert zur Bildung der Referenzkontur (21) herangezogen wird.

8. Überwachungseinrichtung (1) nach einem der Ansprüche 1 bis 7, **dadurch gekennzeichnet, dass** die Konfiguration eines Schutzfelds (6) dadurch erfolgt, dass dieses im Sicherheitssensor (4) anhand vorgegebener Gefährdungsstellen im Überwachungsbereich (5) und anhand vorgegebener Sicherheitsabstände vor Inbetriebnahme des Sicherheitssensors (4) berechnet und im Sicherheitssensor (4) abgespeichert wird.

9. Überwachungseinrichtung (1) nach Anspruch 8, **dadurch gekennzeichnet, dass** während eines Einlernvorgangs eine eine Schutzfeldkontur definierende Bahn von einer Person abgeschritten wird, die mit dem Sicherheitssensor (4) erfasst wird.

10. Überwachungseinrichtung (1) nach Anspruch 9, **dadurch gekennzeichnet, dass** während eines auf den Einlernvorgang folgenden Arbeitsbetriebs in einem Winkelsegment (5a) ein Distanzwert eines Schutzfelds (6) durch den Distanzwert der Referenzkontur (21) ersetzt wird, wenn der Distanzwert des Schutzfelds (6) größer ist, als der Distanzwert der Referenzkontur (21).

11. Überwachungseinrichtung (1) nach einem der Ansprüche 1 bis 10, **dadurch gekennzeichnet, dass** der Einlernvorgang durch Einlesen eines externen Triggersignals gestartet wird.

12. Überwachungseinrichtung (1) nach Anspruch 11, **dadurch gekennzeichnet, dass** das externe Triggersignal von einer Steuerung generiert wird.

13. Überwachungseinrichtung (1) nach Anspruch 12, **dadurch gekennzeichnet, dass** von der Steuerung die Dauer des Einlernvorgangs vorgegeben wird.

14. Überwachungseinrichtung (1) nach einem der Ansprüche 1 bis 13, **dadurch gekennzeichnet, dass** der Sicherheitssensor (4) an einem Fahrzeug angeordnet ist.

15. Verfahren zum Betrieb einer Überwachungseinrichtung (1) mit einem für eine Schutzfeldüberwachung ausgebildeten Sicherheitssensor (4), wobei mit dem Sicherheitssensor (4) Positionen von Objekten in einem Überwachungsbereich (5) bestimmt werden, **dadurch gekennzeichnet, dass** in einem Einlernvorgang anhand von Positionen von mit dem Sicherheitssensor (4) erfassten nichtsicherheitskritischen Objekt eine Referenzkontur (21) im Sicherheitssensor (4) bestimmt wird, welche mittels des Sicherheitssensors (4) erfassten Messwerten fortlaufend auf Plausibilität überprüft wird, wodurch eine Fehlerüberprüfung der Referenzkontur (21) durchgeführt wird, so dass die Referenzkontur (21) ein sicherheitstechnisch geprüftes Element bildet, und dass die Referenzkontur (21) zur Kontrolle von konfigurierten Schutzfeldern (6) verwendet wird.

## Claims

1. Monitoring device (1) comprising a safety sensor (4) designed for protective field monitoring, wherein the safety sensor (4) determines the positions of objects within a monitoring area (5), **characterised in that**, during a teaching-in process, a reference contour (21) is determined in the safety sensor (4) is determined, which is continuously checked for plausibility by means of the measured values detected by the safety sensor (4), thereby performing an error check on the reference contour (21), so that the reference contour (21) forms a safety-verified element, and that the reference contour (21) is used to monitor configured protective fields (6).

2. Monitoring device (1) according to claim 1, **characterised in that** the safety sensor (4) is an optical sensor or a radar sensor.

3. Monitoring device (1) according to one of claims 1 or 2, **characterised in that** the safety sensor (4) is a surface distance sensor.

4. Monitoring device (1) according to claim 3, **characterised in that** the area distance sensor periodically scans an angular range forming the monitoring area (5), wherein the angular range is divided into angular segments (5a), and wherein a distance measurement value is determined for each angular segment (5a).

5. Monitoring device (1) according to claim 4, **characterised in that** the reference contour (21) is determined during the teaching-in process by defining an upper and lower tolerance limit (23) for each distance value determined in an angular segment (5a).

6. Monitoring device (1) according to claim 5, **characterised in that**, for the purpose of a plausibility check, the reference contour (21) is checked to determine whether, following its definition, distance values determined for the individual angular segments (5a) with ly lie within the tolerance limits.

7. Monitoring device (1) according to one of claims 5 or 6, **characterised in that** during the teaching-in process the angular range is scanned multiple times with the safety sensor (4), wherein for each angular segment (5a) the respective smallest distance value is used to form the reference contour (21).

8. Monitoring device (1) according to any one of claims 1 to 7, **characterised in that** the configuration of a protective field (6) is carried out by calculating it in the safety sensor (4) on the basis of predetermined hazard points in the monitoring area (5) and on the basis of predetermined safety distances prior to commissioning of the safety sensor (4), and by storing it in the safety sensor (4).

9. Monitoring device (1) according to claim 8, **characterised in that**, during a teaching-in process, a path defining a protective field contour is walked by a person who is detected by the safety sensor (4).

10. Monitoring device (1) according to claim 9, **characterised in that**, during an operational phase following the teaching-in process, in an angular segment (5a), a distance value of a protective field (6) is replaced by the distance value of the reference contour (21) if the distance value of the protective field (6) is greater than the distance value of the reference contour (21).

11. Monitoring device (1) according to any one of claims 1 to 10, **characterised in that** the teaching procedure is started by reading in an external trigger signal.

12. Monitoring device (1) according to claim 11, **characterised in that** the external trigger signal is generated by a controller.

13. Monitoring device (1) according to claim 12, **characterised in that** the duration of the learning process is specified by the control unit.

14. Monitoring device (1) according to any one of claims 1 to 13, **characterised in that** the safety sensor (4) is arranged on a vehicle.

15. Method for operating a monitoring device (1) with a safety sensor (4) designed for protective field monitoring, wherein the safety sensor (4) are used to determine the positions of objects within a monitoring area (5), **characterised in that**, during a teaching process, a reference contour (21) is determined in the safety sensor (4) is determined, which is continuously checked for plausibility by means of measured values detected by the safety sensor (4), thereby performing an error check on the reference contour (21), so that the reference contour (21) forms a safety-verified element, and that the reference contour (21) is used to monitor configured protective fields (6).

## Revendications

1. Dispositif de surveillance (1) comprenant un capteur de sécurité (4) conçu pour la surveillance de champs de protection, dans lequel le capteur de sécurité (4) détermine les positions d'objets à l'intérieur d'une zone de surveillance (5), **caractérisé en ce que**, au cours d'un processus d'apprentissage, un contour de référence (21) est déterminé dans le capteur de sécurité (4), lequel est continuellement vérifié quant à sa plausibilité au moyen des valeurs mesurées détectées par le capteur de sécurité (4), effectuant ainsi un contrôle d'erreur sur le contour de référence (21), de sorte que le contour de référence (21) forme un élément dont la sécurité est vérifiée, et **en ce que** le contour de référence (21) est utilisé pour surveiller des champs de protection (6) configurés.

2. Dispositif de surveillance (1) selon la revendication 1, **caractérisé en ce que** le capteur de sécurité (4) est un capteur optique ou un capteur radar.

3. Dispositif de surveillance (1) selon l'une des revendications 1 ou 2, **caractérisé en ce que** le capteur de sécurité (4) est un capteur de distance de surface.

4. Dispositif de surveillance (1) selon la revendication 3, **caractérisé en ce que** le capteur de distance de surface balaye périodiquement une plage angulaire formant la zone de surveillance (5), dans lequel la plage angulaire est divisée en segments angulaires (5a), et dans lequel une valeur de mesure de distance est déterminée pour chaque segment angulaire (5a).

5. Dispositif de surveillance (1) selon la revendication 4, **caractérisé en ce que** le contour de référence (21) est déterminé pendant le processus d'apprentissage en définissant une limite de tolérance supérieure et inférieure (23) pour chaque valeur de distance déterminée dans un segment angulaire (5a).

6. Dispositif de surveillance (1) selon la revendication 5, **caractérisé en ce que**, aux fins d'un contrôle de plausibilité, le contour de référence (21) est vérifié afin de déterminer si, après sa définition, les valeurs de distance déterminées pour les segments angulaires individuels (5a) se situent toutes dans les limites de tolérance.

7. Dispositif de surveillance (1) selon l'une des revendications 5 ou 6, **caractérisé en ce que**, pendant le processus d'apprentissage, la plage angulaire est balayée plusieurs fois par le capteur de sécurité (4) , la valeur de distance la plus petite respective étant utilisée pour chaque segment angulaire (5a) afin de former le contour de référence (21).

8. Dispositif de surveillance (1) selon l'une quelconque des revendications 1 à 7, **caractérisé en ce que** la configuration d'un champ de protection (6) est réalisée en la calculant dans le capteur de sécurité (4) sur la base de points de danger prédéterminés dans la zone de surveillance (5) et sur la base de distances de sécurité prédéterminées avant la mise en service du capteur de sécurité (4), et en l'enregistrant dans le capteur de sécurité (4).

9. Dispositif de surveillance (1) selon la revendication 8, **caractérisé en ce que**, pendant un processus d'apprentissage, un parcours définissant un contour de champ de protection est parcouru par une personne qui est détectée par le capteur de sécurité (4).

10. Dispositif de surveillance (1) selon la revendication 9, **caractérisé en ce que**, pendant une phase de fonctionnement suivant le processus d'apprentissage, dans un segment angulaire (5a), une valeur de distance d'un champ de protection (6) est remplacée par la valeur de distance du contour de référence (21) si la valeur de distance du champ de protection (6) est supérieure à la valeur de distance du contour de référence (21).

11. Dispositif de surveillance (1) selon l'une quelconque des revendications 1 à 10, **caractérisé en ce que** la procédure d'apprentissage est lancée par la lecture d'un signal de déclenchement externe.

12. Dispositif de surveillance (1) selon la revendication 11, **caractérisé en ce que** le signal de déclenchement externe est généré par un contrôleur.

13. Dispositif de surveillance (1) selon la revendication 12, **caractérisé en ce que** la durée du processus d'apprentissage est spécifiée par l'unité de commande.

14. Dispositif de surveillance (1) selon l'une quelconque des revendications 1 à 13, **caractérisé en ce que** le capteur de sécurité (4) est disposé sur un véhicule.

15. Procédé de fonctionnement d'un dispositif de surveillance (1) avec un capteur de sécurité (4) conçu pour la surveillance d'un champ de protection, dans lequel le capteur de sécurité (4) est utilisé pour déterminer les positions d'objets à l'intérieur d'une zone de surveillance (5), **caractérisé en ce que**, pendant un processus d'apprentissage, un contour de référence (21) est déterminé dans le capteur de sécurité (4), lequel est continuellement vérifié quant à sa plausibilité au moyen de valeurs mesurées détectées par le capteur de sécurité (4), ce qui permet d'effectuer un contrôle d'erreur sur le contour de référence (21), de sorte que le contour de référence (21) forme un élément dont la sécurité est vérifiée, et **en ce que** le contour de référence (21) ainsi t est utilisé pour surveiller des champs de protection (6) configurés.
